(19) Europäisches Patentamt
European Patent Office
Office européen des brevets

(11) **EP 3 522 270 B1**

(12) **EUROPEAN PATENT SPECIFICATION**

(45) Date of publication and mention
of the grant of the patent:
**20.09.2023 Bulletin 2023/38**

(21) Application number: **18806311.9**

(22) Date of filing: **25.05.2018**

(51) International Patent Classification (IPC):
*H01M 4/04* (2006.01)    *H01M 4/131* (2010.01)
*H01M 4/1391* (2010.01)    *H01M 4/62* (2006.01)
*H01M 10/0525* (2010.01)    *H01M 4/38* (2006.01)
*H01M 4/525* (2010.01)

(52) Cooperative Patent Classification (CPC):
**H01M 4/0404; H01M 4/0416; H01M 4/0435;**
**H01M 4/131; H01M 4/1391; H01M 4/386;**
**H01M 10/0525;** H01M 4/525; H01M 4/623;
H01M 4/625; H01M 2004/021; H01M 2004/028;
Y02E 60/10

(86) International application number:
**PCT/KR2018/005996**

(87) International publication number:
**WO 2018/217071 (29.11.2018 Gazette 2018/48)**

(54) **FABRICATION METHOD OF CATHODE FOR SECONDARY BATTERY, CATHODE FOR SECONDARY BATTERY FABRICATED THEREBY, AND LITHIUM SECONDARY BATTERY COMPRISING SAME CATHODE**

VERFAHREN ZUR HERSTELLUNG EINER KATHODE FÜR EINE SEKUNDÄRBATTERIE, DAMIT HERGESTELLTE KATHODE FÜR EINE SEKUNDÄRBATTERIE UND LITHIUMSEKUNDÄRBATTERIE MIT DER KATHODE

PROCÉDÉ DE FABRICATION DE CATHODE POUR UNE BATTERIE RECHARGEABLE, CATHODE POUR UNE BATTERIE RECHARGEABLE FABRIQUÉE PAR CE PROCÉDÉ, ET BATTERIE RECHARGEABLE AU LITHIUM COMPRENANT LA MÊME CATHODE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **25.05.2017 KR 20170064830**

(43) Date of publication of application:
**07.08.2019 Bulletin 2019/32**

(73) Proprietor: **LG Energy Solution, Ltd.**
**Seoul 07335 (KR)**

(72) Inventors:
• **LEE, Yong Ju**
**Daejeon 34122 (KR)**
• **SHIN, Sun Young**
**Daejeon 34122 (KR)**
• **PARK, Se Mi**
**Daejeon 34122 (KR)**
• **OH, Il Geun**
**Daejeon 34122 (KR)**
• **KIM, Eun Kyung**
**Daejeon 34122 (KR)**

(74) Representative: **Hoffmann Eitle**
**Patent- und Rechtsanwälte PartmbB**
**Arabellastraße 30**
**81925 München (DE)**

(56) References cited:
WO-A1-2017/067996    FR-A1- 3 040 547
JP-B2- 3 674 324    KR-A- 20170 045 173
KR-A- 20170 045 173    KR-B1- 101 595 333
US-A1- 2016 372 784    US-A1- 2016 372 784

- SHANMUKARAJ D ET AL: "Sacrificial salts: Compensating the initial charge irreversibility in lithium batteries", ELECTROCHEMISTRY COMMUNICATIONS, ELSEVIER, AMSTERDAM, NL, vol. 12, no. 10, 1 October 2010 (2010-10-01), pages 1344-1347, XP027423660, ISSN: 1388-2481, DOI: 10.1016/J.ELECOM.2010.07.016 [retrieved on 2010-10-01]
- JOSE L. TIRADO ET AL: "Modification of the Electrochemical Behavior of Carbon Nanofibers for Lithium-Ion Batteries by Impregnation, and Thermal and Hydrothermal Treatments", ECS TRANSACTIONS, vol. 1, no. 26, 1 January 2006 (2006-01-01), pages 9-16, XP055662849, DOI: 10.1149/1.2209352
- SHANMUKARAJ, DEVARAJ et al.: "Sacrificial Salts: Compensating the Initial Charge Irreversibility in Lithium Batteries", Electrochemistry Communications, vol. 12, no. 10, October 2010 (2010-10), pages 1344-1347, XP027423660,

**Description**

**TECHNICAL FIELD**

The present invention relates to a method of preparing a positive electrode for a secondary battery, a positive electrode for a secondary battery prepared thereby, and a lithium secondary battery including the positive electrode.

**BACKGROUND ART**

Recently, with the rapid spread of electronic devices using batteries, such as mobile phones, notebook computers, and electric vehicles, demand for secondary batteries with relatively high capacity as well as small size and lightweight has been rapidly increased. Particularly, since a lithium secondary battery is lightweight and has high energy density, the lithium secondary battery is in the spotlight as a driving power source for portable devices. Accordingly, research and development efforts for improving the performance of the lithium secondary battery have been actively conducted. In the lithium secondary battery in a state in which an organic electrolyte solution or a polymer electrolyte solution is filled between a positive electrode and a negative electrode which are respectively formed of active materials capable of intercalating and deintercalating lithium ions, electrical energy is produced by oxidation and reduction reactions when the lithium ions are intercalated/deintercalated into/from the positive electrode and the negative electrode.

Lithium transition metal oxides, such as lithium cobalt oxide ($LiCoO_2$), lithium nickel oxide ($LiNiO_2$), and lithium manganese oxide ($LiMnO_2$), are mainly used as a positive electrode active material of the lithium secondary battery. A crystalline carbon material, such as natural graphite or artificial graphite having a high degree of softness, or a low crystalline carbon material having a pseudo-graphite structure or turbostratic structure obtained by carbonizing a hydrocarbon or polymer at a low temperature of 1,000°C to 1,500°C, is generally used as a negative electrode active material. Since the crystalline carbon material has high true density, it is advantageous to pack the active material and is advantageous in that electric potential flatness, initial capacity, and charge/discharge reversibility are excellent, but there is a limitation in that capacity is low in terms of energy density per unit volume or unit gram of the active material.

Thus, there is a demand for a high-capacity electrode active material capable of replacing the carbon material having low capacity. For this purpose, a number of studies have been made on the use of a (quasi) metal, such as silicon (Si) or tin (Sn), which exhibits higher charge and discharge capacity than the carbon material and is electrochemically alloyable with lithium, as the electrode active material.

Typically, in order to increase energy efficiency in configuring the lithium secondary battery, an amount of lithium, which may charge the positive electrode during first charge and discharge and may be received during discharge, and an amount of lithium, which may charge the negative electrode and may be discharged during discharge, are designed the same, but, since a negative electrode material including a Si-based composite, as a high capacity negative electrode material, has a lower charge/discharge efficiency than the positive electrode, life characteristics are reduced as a positive electrode with higher initial efficiency is used. If the positive electrode with high initial efficiency is used, a negative electrode potential is increased during discharge and shrinkage increases, and thus, an electrical short circuit may occur. Therefore, there is a need for a positive electrode capable of reducing the initial efficiency without degrading life characteristics, capacity characteristics, and high-temperature storage characteristics when a Si-based negative electrode is used.

Shanmukaraj et al. report an electrochemical study of using various lithium salts (azide, oxocarbons, dicarboxylates and hydrazides) as sacrificial salts in lithium ion batteries (Electrochemistry Communications, 2010, 12(10), pp. 1344-1347). They report that during the first charge, the anion loses electrons and converts to gaseous $N_2$, CO or $CO_2$ within an acceptable potential range (3 to 4.5 V).

FR 3 040 547 A1 describes a method for forming a cell of a lithium-ion battery comprising a material for a positive electrode having a pore ratio of between 20 and 35% and comprising at least one sacrificial salt, a material for a negative electrode, a separator and an electrolyte, comprising the following successive steps: (a) heating the cell to a temperature T of between 30 and 45°C; and (b) charging the cell to a potential lower than or equal to 4.8 V.

WO 2017/067996 A1 describes a method of preparing a lithium-ion accumulator comprising a positive electrode and a negative electrode which are disposed on either side of an electrolyte, said positive electrode comprising, as active material, a lithium-based material, said method comprising the following steps: a) a step of depositing lithium salt on the surface of the positive electrode, before placement in the accumulator; b) a step of assembling the positive electrode, the negative electrode and the electrolyte; and c) a step of forming a passivation layer on the surface of the negative electrode with the lithium ions arising from the decomposition of the lithium salt by applying a first charge to the assembly.

KR 2017 0045173 A describes an electrode assembly, having a separation film interposed between a positive electrode coated with positive electrode mixture on a positive electrode current collector and a negative electrode coated with negative electrode mixture on a negative electrode current collector, the electrode assembly being built-in in a battery case and embedded in a non-aqueous electrolyte containing lithium salt, wherein at least one of the positive electrode, the separation film, and the non-aqueous electrolyte comprises sacrificial salt having oxidation potential of 5 V or less compared to lithium, and reduction potential of 0 V or less.

US 2016/372784 A1 describes a lithium ion electrochemical cell comprising a lithiation agent. The lithiation agent, which comprises a lithium constituent, is designed to provide an excess source of lithium to minimize capacity loss of the lithium ion electrochemical cell. The anode of the lithium ion cell comprises a material matrix comprising carbon, graphene and an active element such as silicon or tin.

Tirado et al. report the electrochemical behavior of Vapor Grown Carbon Nanofibers (VGCnF) in lithium test cells. After activation with refluxing nitric acid, the ac impedance spectra and $^7$Li MAS NMR spectra show significant changes and the specific capacity increases (ECS Transactions, 2006, 1(26), pp. 9-16). The hydrothermal and acid treatments treatments are reported to improve the surface properties of VGCnF, as evidenced by ac impedance spectroscopy. Reversible capacities around 700 mAhg[-1] are achieved for tin dioxide-carbon nanofibers composite electrodes. $^{119}$Sn Mössbauer results show the participation of tin in the redox processes and the formation of lithium-tin intermetallic compounds.

## DISCLOSURE OF THE INVENTION

### TECHNICAL PROBLEM

An aspect of the present invention provides a method of preparing a positive electrode for a secondary battery, which may reduce initial efficiency while not reducing discharge capacity of the positive electrode, not degrading performance of a positive electrode active material, or not reducing capacity density of the positive electrode, and a positive electrode for a secondary battery prepared thereby.

### TECHNICAL SOLUTION

According to an aspect of the present invention, there is provided a method of preparing a positive electrode for a secondary battery which includes preparing a positive electrode by forming a positive electrode active material layer including a positive electrode active material, a conductive agent, and a binder on a positive electrode collector; impregnating the positive electrode in a sacrificial salt solution including a sacrificial salt additive, wherein the sacrificial salt additive decomposes into lithium and $N_2$, CO, or $CO_2$ during charge so that the lithium is charged into a negative electrode and $N_2$, CO, or $CO_2$ are vaporized and removed through a gas supply process; and, after the impregnating of the positive electrode in the sacrificial salt solution, drying the positive electrode to fill pores of the positive electrode active material layer with the sacrificial salt additive.

According to another aspect of the present invention, there is provided a positive electrode for a secondary battery obtainable by the method of the invention, the positive electrode including a positive electrode collector; and a positive electrode active material layer which is formed on the positive electrode collector and includes a positive electrode active material, a conductive agent, and a binder, and the pores of the positive electrode active material layer are filled with a sacrificial salt additive, wherein the positive electrode active material layer has a porosity of 20% or less, and wherein the sacrificial salt additive decomposes into lithium and $N_2$, CO, or $CO_2$ during charge so that the lithium is charged into a negative electrode and $N_2$, CO, or $CO_2$ are vaporized and removed through a gas supply process.

According to another aspect of the present invention, there is provided a lithium secondary battery including a positive electrode, a negative electrode, and a separator disposed between the positive electrode and the negative electrode, wherein the positive electrode is the positive electrode for a secondary battery.

### ADVANTAGEOUS EFFECTS

According to the present invention, a positive electrode, which may reduce initial efficiency while not reducing discharge capacity of the positive electrode, not degrading performance of a positive electrode active material, or not reducing capacity density of the positive electrode, may be prepared.

Also, since the positive electrode thus prepared has low initial efficiency while having excellent capacity characteristics, a lithium secondary battery having high capacity and excellent life characteristics may be achieved by using the positive electrode with a silicon (Si)-based negative electrode.

### MODE FOR CARRYING OUT THE INVENTION

Hereinafter, the present invention will be described in more detail to allow for a clearer understanding of the present invention. In this case, it will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

A method of preparing a positive electrode for a secondary battery of the present invention includes: preparing a positive electrode by forming a positive electrode active material layer including a positive electrode active material, a conductive agent, and a binder on a positive electrode collector; impregnating the positive electrode in a sacrificial salt solution including a sacrificial salt additive; and, after the impregnating of the positive electrode in the sacrificial salt solution, drying the positive electrode to fill pores of the positive electrode active material layer with the sacrificial salt additive. The sacrificial salt additive is one that decomposes into lithium and $N_2$, CO, or $CO_2$ during charge so that the lithium is charged into a negative electrode and $N_2$, CO, or $CO_2$ are vaporized and removed through a gas supply process

Typically, in order to reduce initial efficiency of a positive electrode, an active material with high irreversibility was added, or a positive electrode active material was modified and used so that the initial efficiency was lowered. However, in a case in which the active material with high irreversibility was added, there was a limitation in that discharge capacity was reduced, and, in a case in which the positive electrode active material modified so as to lower the initial efficiency was used, there was a limitation in that performance, such as life characteristics, capacity characteristics, and high-temperature storage characteristics, of the positive electrode active material was also degraded. Thus, a method of reducing the initial efficiency by adding a sacrificial salt additive to the positive electrode has been considered. The expression "sacrificial salt additive" denotes an irreversible additive capable of increasing initial charge capacity. The sacrificial salt additive denotes one that is decomposed into lithium and $N_2$, CO, or $CO_2$ during charge so that the lithium may be charged into a negative electrode and $N_2$, CO, or $CO_2$ may be vaporized and removed through a gas supply process.

However, in a case in which the sacrificial salt additive is mixed with a conventional positive electrode active material to prepare a positive electrode slurry and a positive electrode is prepared by using the positive electrode slurry, since a separate space for the sacrificial salt additive is required and excessive rolling is also not possible due to its rolling limit, there is a limitation in that a decrease in capacity density of the positive electrode due to the addition of the sacrificial salt additive is inevitable.

Thus, in the present invention, in order to address the above-described limitation, after a positive electrode including a positive electrode active material is first prepared, the positive electrode is impregnated in a sacrificial salt solution including a sacrificial salt additive and then dried to fill pores of a positive electrode active material layer with the sacrificial salt additive. Accordingly, the initial efficiency may be reduced while not reducing the capacity density of the positive electrode.

When describing the present invention in more detail, a positive electrode is first prepared by forming a positive electrode active material layer including a positive electrode active material, a conductive agent, and a binder on a positive electrode collector.

The positive electrode may be prepared according to a typical method of preparing a positive electrode. Specifically, a positive electrode collector is coated with a composition for forming a positive electrode active material layer, which is prepared by dissolving or dispersing the positive electrode active material, the conductive agent, and the binder in a solvent, and the positive electrode may then be prepared by drying and rolling the coated positive electrode collector.

Also, as another method, the positive electrode may be prepared by casting the above-described composition for forming a positive electrode active material layer on a separate support and then laminating a film separated from the support on the positive electrode collector.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 um to 500 um, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

A lithium transition metal oxide typically used as a positive electrode active material may be used as the positive electrode active material, and a lithium transition metal oxide, which includes at least one selected from the group consisting of nickel (Ni), cobalt (Co), and manganese (Mn), may be more preferably used. For example, the positive electrode active material may include a layered compound, such as lithium cobalt oxide ($LiCoO_2$) or lithium nickel oxide ($LiNiO_2$), lithium manganese oxides such as $Li_{1+x1}Mn_{2-x1}O_4$ (where x1 is 0 to 0.33), $LiMnO_3$, $LiMn_2O_3$, and $LiMnO_2$, Ni-site type lithium nickel oxide expressed by a chemical formula of $LiNi_{1-x2}M^1_{x2}O_2$ (where $M^1$ = Co, Mn, aluminum (Al), copper (Cu), iron (Fe), magnesium (Mg), boron (B), or gallium (Ga), and x2 = 0.01 to 0.3), lithium manganese composite oxide expressed by a chemical formula of $LiMn_{2-x3}M^2_{x3}O_2$ (where $M^2$ = Co, Ni, Fe, chromium (Cr), zinc (Zn), or tantalum (Ta), and x3 = 0.01 to 0.1) or $Li_2Mn_3M^3O_8$ (where $M^3$ = Fe, Co, Ni, Cu, or Zn), and spinel-structured lithium manganese composite oxide expressed by $LiNi_{x4}Mn_{2-x4}O_4$ (where x4 = 0.01 to 1), but the positive electrode active material is not limited thereto.

Also, a lithium transition metal oxide represented by the following Formula 1 may be included as the positive electrode active material.

$$[Formula\ 1] \qquad Li_{1+a}[Ni_{1-x-y-z}Co_xMn_yM_z]_{1-a}O_2$$

In Formula 1, M is at least one element selected from the group consisting of Al, zirconium (Zr), titanium (Ti), Mg, Ta, niobium (Nb), molybdenum (Mo), and Cr, $0 \leq a \leq 0.5$, $0 \leq x \leq 0.5$, $0 \leq y \leq 0.5$, $0 \leq z \leq 0.1$, and $0 \leq x+y+z \leq 0.7$.

The positive electrode active material may be included in an amount of 80 wt% to 99 wt%, for example, 85 wt% to 98 wt% based on a total weight of the positive electrode active material layer. When the positive electrode active material is included in an amount within the above-described range, excellent capacity characteristics may be exhibited.

The conductive agent is used to provide conductivity to the electrode, wherein any conductive agent may be used without particular limitation as long as it has electrical conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, carbon nanotubes (CNT), and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 1 wt% to 30 wt% based on the total weight of the positive electrode active material layer.

The binder improves the adhesion between the positive electrode active material particles and the adhesion between the positive electrode active material and a current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated-EPDM, a styrene-butadiene rubber (SBR), and a fluorine rubber, or copolymers thereof, and any one thereof or a mixture of two or more thereof may be used. The binder may be included in an amount of 1 wt% to 30 wt% based on the total weight of the positive electrode active material layer.

The solvent may be a solvent normally used in the art, and may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the solvent may dissolve or disperse the positive electrode active material, the conductive agent, and the binder in consideration of a coating thickness of the slurry and manufacturing yield, and may allow to have a viscosity that may provide excellent thickness uniformity during the subsequent coating for the preparation of the positive electrode.

When rolling is performed after coating the composition for forming a positive electrode active material layer, if the rolling is excessively performed, elongation of the positive electrode collector may be increased, electrode disconnection may occur, and capacity reduction may occur due to damage of the positive electrode active material. Thus, it is necessary to perform the rolling at a level at which the electrode disconnection and the damage of the positive electrode active material do not occur, and a certain amount of pores is generally generated in the positive electrode active material layer of the positive electrode thus prepared. For example, the positive electrode active material layer of the positive electrode thus prepared may have a porosity of 15% to 35%, more preferably 15% to 30%, and most preferably 17% to 28%.

Next, the positive electrode prepared is impregnated in a sacrificial salt solution including a sacrificial salt additive.

The sacrificial salt solution may be prepared by dissolving the sacrificial salt additive in a solvent. The solvent is not particularly limited as long as it may dissolve the sacrificial salt additive and may be dried afterwards, and, for example, water may be used. Also, in order to increase solubility of the sacrificial salt additive, the solvent is heated so that the sacrificial salt additive may be dissolved in the solvent at 40°C to 80°C, more preferably 40°C to 70°C, and most preferably 50°C to 70°C.

The sacrificial salt additive is an irreversible additive, wherein any sacrificial salt additive may be used as long as it is decomposed into lithium and $N_2$, CO, or $CO_2$ during charge so that the lithium may be charged into a negative electrode and $N_2$, CO, or $CO_2$ may be vaporized and removed through a gas supply process, and, for example, the sacrificial salt additive may include at least one selected from the group consisting of lithium azide, lithium oxocarbon, dicarboxylic lithium, and lithium hydrazide. Specifically, the sacrificial salt additive may include lithium azide as represented by $LiN_3$, lithium oxocarbon as represented by $Li_2C_3O_3$, $Li_2C_4O_4$, $Li_2C_5O_5$, or $Li_2C_6O_6$, dicarboxylic lithium as represented by $Li_2C_2O_4$, $Li_2C_3O_3$, or $Li_2C_4O_6$, and lithium hydrazide as represented by $Li_2C_2O_2N_4$, and may be most preferably lithium azide, $LiN_3$.

The sacrificial salt solution may include the sacrificial salt additive in an amount of 5 wt% to 50 wt%, more preferably 10 wt% to 45 wt%, and most preferably 20 wt% to 40 wt%. Also, time for impregnating the positive electrode in the sacrificial salt solution may be in a range of 10 minutes to 300 minutes, more preferably 30 minutes to 250 minutes, and most preferably 60 minutes to 200 minutes.

Next, the positive electrode impregnated in the sacrificial salt solution is dried to fill pores of the positive electrode active material layer with the sacrificial salt additive.

The drying may be performed in a temperature range of 80°C to 200°C, more preferably 100°C to 180°C, and most preferably 110°C to 150°C for 150 minutes to 500 minutes.

As described above, with respect to the positive electrode which is impregnated in the sacrificial salt solution and then dried, since the pores of the positive electrode active material layer are filled with the sacrificial salt additive, initial charge capacity is increased due to the sacrificial salt additive while the capacity density of the positive electrode is not reduced, but, since the discharge capacity is not reduced but maintained due to the addition of the sacrificial salt additive, the initial efficiency of the positive electrode may be reduced.

In order to increase an amount of the sacrificial salt additive filled into the pores of the positive electrode active material layer, the process of drying after the impregnation in the sacrificial salt solution may be repeated 2 to 3 times.

The positive electrode filled with the sacrificial salt additive may include the sacrificial salt additive in an amount of 0.2 part by weight to 10 parts by weight, more preferably 0.5 part by weight to 7 parts by weight, and most preferably 1 part by weight to 5 parts by weight based on 100 parts by weight of the positive electrode active material. Since the sacrificial salt additive is included in an amount of 0.2 part by weight to 10 parts by weight, an effect of reducing the initial efficiency of the positive electrode may be significant, a reduction in contact between the electrodes due to the generation of gas during charge may be prevented, and charge and discharge may be further facilitated by securing pores required for charge and discharge.

As described above, with respect to the positive electrode filled with the sacrificial salt additive, porosity is reduced in comparison to the positive electrode active material layer before being impregnated in the sacrificial salt solution, and the porosity of the positive electrode active material layer filled with the sacrificial salt additive may be more preferably 20% or less, and most preferably 10% to 20%.

The present invention provides the above-described positive electrode for a secondary battery which is prepared according to an embodiment of the present invention. The positive electrode of the present invention includes a positive electrode collector; and a positive electrode active material layer which is formed on the positive electrode collector and includes a positive electrode active material, a conductive agent, a binder, and a sacrificial salt additive, wherein the positive electrode active material layer has a porosity of 20% or less. For example, the positive electrode active material layer may have a porosity of 10% to 20%.

As described above, a certain amount of pores is generally generated in the positive electrode active material layer of the positive electrode generally prepared by rolling in consideration of the electrode disconnection and the damage of the positive electrode active material, and, for example, the positive electrode active material layer may have a porosity of 17% to 28%. However, with respect to the present invention, since the pores of the positive electrode active material layer are filled with the sacrificial salt additive, the porosity becomes 20% or less, for example, 10% to 20%.

Also, since the pores of the positive electrode according to an embodiment of the present invention are filled with the sacrificial salt additive, a volume of the positive electrode is not increased due to the addition of the sacrificial salt additive and the capacity density may not be reduced.

The positive electrode active material layer may have an average thickness of 10 um to 100 um, more preferably 20 um to 90 um, and most preferably 30 um to 80 um.

In addition, types and amounts of the positive electrode active material, the conductive agent, the binder, and the sacrificial salt additive are the same as those previously described.

According to another embodiment of the present invention, an electrochemical device including the positive electrode is provided. The electrochemical device may specifically be a battery or a capacitor, and, for example, may be a lithium secondary battery.

The lithium secondary battery specifically includes a positive electrode, a negative electrode disposed to face the positive electrode, a separator disposed between the positive electrode and the negative electrode, and an electrolyte, wherein the positive electrode is as described above. Also, the lithium secondary battery may further selectively include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 um to 500 um, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

The negative electrode active material layer selectively includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as $SiO_\beta (0 < \beta < 2)$, $SnO_2$, vanadium oxide, and lithium vanadium oxide; or a composite including the metallic compound and the carbonaceous material such as a SiC composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes. A silicon-based negative electrode active material may be more preferably used to achieve high capacity.

When a negative electrode including a Si-based compound, as a negative electrode active material, is used, the initial efficiency of the positive electrode may be reduced and life characteristics may be improved by using the positive electrode of the present invention in which the pores are filled with the sacrificial salt additive.

Also, the binder and the conductive agent may be the same as those previously described in the positive electrode.

The negative electrode active material layer may be prepared by coating a composition for forming a negative electrode, which is prepared by dissolving or dispersing selectively the binder and the conductive agent as well as the negative electrode active material in a solvent, on the negative electrode collector and drying the coated negative electrode collector, or may be prepared by casting the composition for forming a negative electrode on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be selectively used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), fluoroethylene carbonate (FEC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent may be preferably used, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) may be more preferably used. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$ may be used as the lithium salt. The lithium salt may be used in a concentration range of 0.1 M to 2.0 M. In a case in which the concentration of the lithium salt is included within the above range, since the electrolyte may have appropriate conductivity and viscosity, excellent performance of the electrolyte may be obtained and lithium ions may effectively move.

In order to improve lifetime characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further added to the electrolyte in addition to the electrolyte components. In this case, the additive may be included in an amount of 0.1 wt% to 5 wt% based on a total weight of the electrolyte.

As described above, since the lithium secondary battery including the positive electrode active material according to the present invention stably exhibits excellent discharge capacity, output characteristics, and capacity retention, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

## Example 1

$LiCoO_2$, carbon black, and a PVDF binder were mixed in an N-methylpyrrolidone solvent at a weight ratio of 95:2.5:2.5 to prepare a composition for forming a positive electrode active material layer, and one surface of an aluminum current collector was coated with the composition, dried at 130°C, and then rolled to a rolling density of 3.53 g/cc to prepare a positive electrode. In this case, a positive electrode active material layer formed on the current collector had a density of 3.53 g/cc, a thickness of 61 um, and a porosity of 25%.

Also, after water was evaporated from a 20 wt% lithium azide ($LiN_3$) aqueous solution, the temperature was maintained at 60°C to prepare a 30 wt% sacrificial salt solution. The prepared positive electrode was impregnated in the sacrificial salt solution for 60 minutes, then taken out, and dried at 130°C for 200 minutes.

In this case, the porosity was reduced to 18%, and it was confirmed that lithium azide ($LiN_3$) was included in a weight ratio of $LiCoO_2$ : $LiN_3$ of 98:2.

## Example 2

A positive electrode was prepared in the same manner as in Example 1 except that a process of impregnating the positive electrode in the sacrificial salt solution and then drying was repeated 3 times.

In this case, the porosity was reduced to 13%, and it was confirmed that lithium azide ($LiN_3$) was included in a weight ratio of $LiCoO_2$ : $LiN_3$ of 96.5:3.5.

## Comparative Example 1

A positive electrode was prepared in the same manner as in Example 1 except that a process of impregnating the positive electrode in the sacrificial salt solution and drying was not performed.

### Comparative Example 2

Lithium azide ($LiN_3$) was mixed with the composition for forming a positive electrode active material layer of Example 1 such that a weight ratio of $LiCoO_2$ : $LiN_3$ was 98:2, and one surface of an aluminum current collector was coated therewith, dried at 130°C, and then rolled to an electrode density of 3.53 g/cc to prepare a positive electrode.

### Comparative Example 3

Lithium azide ($LiN_3$) was mixed with the composition for forming a positive electrode active material layer of Example 1 such that a weight ratio of $LiCoO_2$ : $LiN_3$ was 98:2, and, after drying at 130°C, a positive electrode was prepared by rolling to an electrode density of 3.6 g/cc.

### [Experimental Example 1: Positive Electrode Density, Thickness, and Porosity Measurement]

Densities, thicknesses, and porosities of the positive electrode active material layers of the positive electrodes prepared in Examples 1 and 2 and Comparative Examples 1 to 3 were measured, and the results thereof are presented in Table 1.
Specifically, the thickness and weight of each positive electrode active material layer were measured, electrode density and volume were respectively calculated from the following equations: electrode density = weight/volume and volume = thickness $\times$ area, and the porosity was calculated using true density of the constituent material and the electrode density.

$$Porosity = \{(true\ density - electrode\ density)/true\ density\} \times 100\%$$

[Table 1]

|  | Electrode density (g/cc) | Thickness ($\mu$m) | Porosity (%) |
|---|---|---|---|
| Example 1 | 3.60 | 61 | 18 |
| Example 2 | 3.66 | 61 | 13 |
| Comparative Example 1 | 3.53 | 61 | 25 |
| Comparative Example 2 | 3.53 | 63 | 21 |
| Comparative Example 3 | 3.60 | 61 | 18 |

Referring to Table 1, with respect to Examples 1 and 2 in which the pores of each positive electrode were filled with the sacrificial salt additive by impregnating the positive electrode in the sacrificial salt solution and then drying, porosities were reduced to 20% or less in comparison to the positive electrode of Comparative Example 1 in which a sacrificial salt was not added, electrode densities were increased due to the addition of the sacrificial salt additive, and thicknesses were not increased, but were at the same level because the sacrificial salt additive was filled into the pores already present. In contrast, with respect to Comparative Example 2 in which the sacrificial salt additive was mixed with the positive electrode active material to prepare the positive electrode, but the positive electrode active material layer was rolled to a density of 3.53 g/cc which was the same density as that before the addition of the sacrificial salt additive, since a separate space for the sacrificial salt additive is required, the thickness of the positive electrode active material layer was increased to 63 um. Also, with respect to Comparative Example 3 in which the sacrificial salt additive was mixed with the positive electrode active material to prepare the positive electrode, but the positive electrode active material layer was rolled to a density of 3.60 g/cc to increase capacity density, an increase in the thickness was not large, but, since the positive electrode active material was damaged due to the excessive rolling, capacity reduction may occur.

### [Experimental Example 2: Charge and Discharge Capacity and Initial Efficiency Evaluation]

0.1 C capacity and efficiency were measured by performing coin half-cell charge-discharge tests using the positive electrodes prepared in Examples 1 and 2 and Comparative Examples 1 to 3, and the results thereof are presented in the following Table 2.

Charge condition: 0.1 C, CC/CV (4.4 V, 0.05 C cut-off)
Discharge condition: 0.1 C, CC (3.0 V cut-off)

[Table 2]

|  | Charge capacity (mAh/g) | Discharge capacity (mAh/g) | Initial efficiency (%) | Capacity density (mAh/cc) |
|---|---|---|---|---|
| Example 1 | 189 | 172 | 91.5 | 607 |
| Example 2 | 197 | 172 | 87.3 | 607 |
| Comparative Example 1 | 177 | 172 | 97.5 | 607 |
| Comparative Example 2 | 187 | 171 | 91.4 | 584 |
| Comparative Example 3 | 181 | 167 | 92.1 | 590 |

Referring to Table 2, with respect to Examples 1 and 2 in which the pores of each positive electrode were filled with the sacrificial salt additive by impregnating the positive electrode in the sacrificial salt solution and then drying, discharge capacity was equivalent to that of the positive electrode of Comparative Example 1 in which the sacrificial salt was not added, but charge capacity was increased to reduce initial efficiency and discharge capacity density was not reduced. In contrast, with respect to Comparative Example 2, discharge capacity density was significantly reduced, and, with respect to Comparative Example 3, since the positive electrode active material was damaged due to the excessive rolling, capacity and discharge capacity density were significantly reduced.

**Claims**

1.    A method of preparing a positive electrode for a secondary battery, the method comprising:

preparing a positive electrode by forming a positive electrode active material layer including a positive electrode active material, a conductive agent, and a binder on a positive electrode collector;
impregnating the positive electrode in a sacrificial salt solution including a sacrificial salt additive; and
after the impregnating of the positive electrode in the sacrificial salt solution, drying the positive electrode to fill pores of the positive electrode active material layer with the sacrificial salt additive,
wherein the sacrificial salt additive decomposes into lithium and $N_2$, CO, or $CO_2$ during charge so that the lithium is charged into a negative electrode and $N_2$, CO, or $CO_2$ are vaporized and removed through a gas supply process.

2.    The method of claim 1, wherein the sacrificial salt additive comprises at least one selected from the group consisting of lithium azide as represented by $LiN_3$, lithium oxocarbon as represented by $Li_2C_3O_3$, $Li_2C_4O_4$, $Li_2C_3O_5$, or $Li_2C_6O_6$, dicarboxylic lithium as represented by $Li_2C_2O_4$, $Li_2C_3O_3$, or $Li_2C_4O_6$, and lithium hydrazide as represented by $Li_2C_2O_2N_4$.

3.    The method of claim 1, wherein the sacrificial salt solution is prepared by dissolving the sacrificial salt additive in a solvent at 40°C to 80°C.

4.    The method of claim 1, wherein the sacrificial salt solution comprises the sacrificial salt additive in an amount of 5 wt% to 50 wt%.

5.    The method of claim 1, wherein a process of drying after the impregnation in the sacrificial salt solution is repeated 2 to 3 times.

6. The method of claim 1, wherein, before the impregnation in the sacrificial salt solution, the positive electrode active material layer has a porosity of 17% to 28%.

7. The method of claim 1, wherein the positive electrode active material layer filled with the sacrificial salt additive has a porosity of 10% to 20%.

8. The method of claim 1, wherein the positive electrode filled with the sacrificial salt additive comprises the sacrificial salt additive in an amount of 0.2 part by weight to 10 parts by weight based on 100 parts by weight of the positive electrode active material.

9. A positive electrode for a secondary battery obtainable by the method of any one of claims 1 to 8, the positive electrode comprising:

   a positive electrode collector; and
   a positive electrode active material layer which is formed on the positive electrode collector and includes a positive electrode active material, a conductive agent, and a binder, and the pores of the positive electrode active material layer are filled with a sacrificial salt additive,
   wherein the positive electrode active material layer has a porosity of 20% or less, and
   wherein the sacrificial salt additive decomposes into lithium and $N_2$, CO, or $CO_2$ during charge so that the lithium is charged into a negative electrode and $N_2$, CO, or $CO_2$ are vaporized and removed through a gas supply process.

10. The positive electrode for a secondary battery of claim 9, wherein the positive electrode active material layer has a porosity of 10% to 20%.

11. The positive electrode for a secondary battery of claim 9, wherein the sacrificial salt additive comprises at least one selected from the group consisting of lithium azide as represented by $LiN_3$, lithium oxocarbon as represented by $Li_2C_3O_3$, $Li_2C_4O_4$, $Li_2C_5O_5$, or $Li_2C_6O_6$, dicarboxylic lithium as represented by $Li_2C_2O_4$, $Li_2C_3O_3$, or $Li_2C_4O_6$, and lithium hydrazide as represented by $Li_2C_2O_2N_4$.

12. The positive electrode for a secondary battery of claim 9, wherein the sacrificial salt additive is included in an amount of 0.2 part by weight to 10 parts by weight based on 100 parts by weight of the positive electrode active material.

13. The positive electrode for a secondary battery of claim 9, wherein the positive electrode active material comprises at least one selected from the group consisting of nickel (Ni), cobalt (Co), and manganese (Mn).

14. A lithium secondary battery comprising a positive electrode, a negative electrode, and a separator disposed between the positive electrode and the negative electrode,
   wherein the positive electrode is the positive electrode for a secondary battery of any one of claims 9 to 13.

15. The lithium secondary battery of claim 14, wherein the negative electrode comprises a silicon (Si)-based negative electrode active material.


**Patentansprüche**

1. Verfahren zur Herstellung einer positiven Elektrode für eine Sekundärbatterie, wobei das Verfahren Folgendes umfasst:

   Herstellen einer positiven Elektrode durch Ausbilden einer Positivelektrodenaktivmaterialschicht, die ein Positivelektrodenaktivmaterial, ein leitfähiges Mittel und ein Bindemittel einschließt, auf einem Positivelektrodenstromabnehmer;
   Imprägnieren der positiven Elektrode in einer Opfersalzlösung, die ein Opfersalzadditiv enthält; und
   nach dem Imprägnieren der positiven Elektrode in der Opfersalzlösung, Trocknen der positiven Elektrode, um die Poren der Positivelektrodenaktivmaterialschicht mit dem Opfersalzadditiv zu füllen,
   wobei sich das Opfersalzadditiv während des Ladens in Lithium und $N_2$, CO oder $CO_2$ zersetzt, so dass das Lithium in eine negative Elektrode geladen wird und $N_2$, CO oder $CO_2$ verdampft und durch ein Gaszufuhrverfahren entfernt wird.

2. Verfahren nach Anspruch 1, bei dem das Opfersalzadditiv mindestens einen Vertreter umfasst, ausgewählt aus der Gruppe bestehend aus Lithiumazid, dargestellt durch $LiN_3$, Lithiumoxokohlenstoff, dargestellt durch $Li_2C_3O_3$, $Li_2C_4O_4$, $Li_2C_5O_5$ oder $Li_2C_6O_6$, Lithiumdicarbonsäure, dargestellt durch $Li_2C_2O_4$, $Li_2C_3O_5$ oder $Li_2C_4O_6$, und Lithiumhydrazid, dargestellt durch $Li_2C_2O_2N_4$.

3. Verfahren nach Anspruch 1, bei dem die Opfersalzlösung durch Auflösen des Opfersalzadditivs in einem Lösungsmittel bei 40°C bis 80°C hergestellt wird.

4. Verfahren nach Anspruch 1, bei dem die Opfersalzlösung das Opfersalzadditiv in einer Menge von 5 Gew.-% bis 50 Gew.-% umfasst.

5. Verfahren nach Anspruch 1, bei dem ein Trocknungsverfahren nach der Imprägnierung in der Opfersalzlösung 2 bis 3 Mal wiederholt wird.

6. Verfahren nach Anspruch 1, bei dem die Positivelektrodenaktivmaterialschicht vor der Imprägnierung in der Opfersalzlösung eine Porosität von 17% bis 28% aufweist.

7. Verfahren nach Anspruch 1, bei dem die mit dem Opfersalzadditiv gefüllte Positivelektrodenaktivmaterialschicht eine Porosität von 10% bis 20% aufweist.

8. Verfahren nach Anspruch 1, bei dem die mit dem Opfersalzadditiv gefüllte positive Elektrode das Opfersalzadditiv in einer Menge von 0,2 Gewichtsteilen bis 10 Gewichtsteilen, bezogen auf 100 Gewichtsteile des Positivelektrodenaktivmaterials, umfasst.

9. Positive Elektrode für eine Sekundärbatterie, die durch das Verfahren nach mindestens einem der Ansprüche 1 bis 8 erhältlich ist, wobei die positive Elektrode Folgendes umfasst:

einen Positivelektrodenstromabnehmer; und
eine Positivelektrodenaktivmaterialschicht, die auf dem Positivelektrodenstromabnehmer ausgebildet ist und ein Positivelektrodenaktivmaterial, ein leitfähiges Mittel und ein Bindemittel einschließt, und wobei die Poren der Positivelektrodenaktivmaterialschicht mit einem Opfersalzadditiv gefüllt sind,
wobei die Positivelektrodenaktivmaterialschicht eine Porosität von 20% oder weniger aufweist, und
wobei sich das Opfersalzadditiv während des Ladens in Lithium und $N_2$, CO oder $CO_2$ zersetzt, so dass das Lithium in eine negative Elektrode geladen wird und $N_2$, CO oder $CO_2$ verdampft und durch ein Gaszufuhrverfahren entfernt wird.

10. Positive Elektrode für eine Sekundärbatterie nach Anspruch 9, wobei die Positivelektrodenaktivmaterialschicht eine Porosität von 10% bis 20% aufweist.

11. Positive Elektrode für eine Sekundärbatterie nach Anspruch 9, wobei das Opfersalzadditiv mindestens einen Vertreter umfasst, ausgewählt aus der Gruppe bestehend aus Lithiumazid, dargestellt durch $LiN_3$, Lithiumoxokohlenstoff, dargestellt durch $Li_2C_3O_3$, $Li_2C_4O_4$, $Li_2C_5O_5$ oder $Li_2C_6O_6$, Lithiumdicarbonsäure, dargestellt durch $Li_2C_2O_4$, $Li_2C_3O_3$ oder $Li_2C_4O_6$, und Lithiumhydrazid, dargestellt durch $Li_2C_2O_2N_4$.

12. Positive Elektrode für eine Sekundärbatterie nach Anspruch 9, wobei das Opfersalzadditiv in einer Menge von 0,2 Gewichtsteilen bis 10 Gewichtsteilen, bezogen auf 100 Gewichtsteile des Positivelektrodenaktivmaterials enthalten ist.

13. Positive Elektrode für eine Sekundärbatterie nach Anspruch 9, wobei das Positivelektrodenaktivmaterial mindestens einen Vertreter, ausgewählt aus der Gruppe bestehend aus Nickel (Ni), Kobalt (Co) und Mangan (Mn), umfasst.

14. Lithium-Sekundärbatterie, die eine positive Elektrode, eine negative Elektrode und einen zwischen der positiven Elektrode und der negativen Elektrode angeordneten Separator umfasst,
wobei die positive Elektrode die positive Elektrode für eine Sekundärbatterie nach mindestens einem der Ansprüche 9 bis 13 ist.

15. Lithium-Sekundärbatterie nach Anspruch 14, wobei die negative Elektrode ein Negativelektrodenaktivmaterial auf Silizium (Si)-Basis umfasst.

**Revendications**

1. Procédé de préparation d'une électrode positive pour une batterie secondaire, le procédé comprenant les étapes consistant à :

préparer une électrode positive en formant une couche de matériau actif d'électrode positive incluant un matériau actif d'électrode positive, un agent conducteur et un liant sur un collecteur d'électrode positive ;
imprégner l'électrode positive dans une solution saline sacrificielle incluant un additif salin sacrificiel ; et
après l'imprégnation de l'électrode positive dans la solution saline sacrificielle, sécher l'électrode positive pour remplir des pores de la couche de matériau actif d'électrode positive avec l'additif salin sacrificiel,
dans lequel l'additif salin sacrificiel se décompose en lithium et $N_2$, CO ou $CO_2$ pendant la charge de sorte que le lithium est chargé dans une électrode négative et du $N_2$, CO ou $CO_2$ sont vaporisés et retirés par un processus d'alimentation en gaz.

2. Procédé selon la revendication 1, dans lequel l'additif salin sacrificiel comprend au moins l'un sélectionné à partir du groupe consistant en l'azoture de lithium tel que représenté par LiN3, l'oxocarbone de lithium tel que représenté par $Li_2C_3O_3$, $Li_2C_4O_4$, $Li_2C_5O_3$ ou $Li_2C_6O_6$, le lithium dicarboxylique tel que représenté par $Li_2C_2O_4$, $Li_2C_3O_5$ ou $Li_2C_4O_6$ et l'hydrazide de lithium tel que représenté par $Li_2C_2O_2N_4$.

3. Procédé selon la revendication 1, dans lequel la solution saline sacrificielle est préparée en dissolvant l'additif salin sacrificiel dans un solvant à 40°C à 80 °C.

4. Procédé selon la revendication 1, dans lequel la solution saline sacrificielle comprend l'additif salin sacrificiel en une quantité de 5 % en poids à 50 % en poids.

5. Procédé selon la revendication 1, dans lequel un processus de séchage après l'imprégnation dans la solution saline sacrificielle est répété 2 à 3 fois.

6. Procédé selon la revendication 1, dans lequel, avant l'imprégnation dans la solution saline sacrificielle, la couche de matériau actif d'électrode positive présente une porosité de 17 % à 28 %.

7. Procédé selon la revendication 1, dans lequel la couche de matériau actif d'électrode positive remplie de l'additif salin sacrificiel présente une porosité de 10 % à 20 %.

8. Procédé selon la revendication 1, dans lequel l'électrode positive remplie de l'additif salin sacrificiel comprend l'additif salin sacrificiel en une quantité de 0,2 partie en poids à 10 parties en poids sur la base de 100 parties en poids du matériau actif d'électrode positive.

9. Électrode positive pour une batterie secondaire pouvant être obtenue par le procédé selon l'une quelconque des revendications 1 à 8, l'électrode positive comprenant :

un collecteur d'électrode positive ; et
une couche de matériau actif d'électrode positive qui est formée sur le collecteur d'électrode positive et inclut un matériau actif d'électrode positive, un agent conducteur et un liant, et les pores de la couche de matériau actif d'électrode positive sont remplis d'un additif salin sacrificiel,
dans laquelle la couche de matériau actif d'électrode positive présente une porosité de 20 % ou moins, et
dans laquelle l'additif salin sacrificiel se décompose en lithium et $N_2$, CO ou $CO_2$ pendant la charge de sorte que le lithium est chargé dans une électrode négative et du $N_2$, CO ou $CO_2$ sont vaporisés et retirés par un processus d'alimentation en gaz.

10. Électrode positive pour une batterie secondaire selon la revendication 9, dans laquelle la couche de matériau actif d'électrode positive présente une porosité de 10 % à 20 %.

11. Électrode positive pour une batterie secondaire selon la revendication 9, dans laquelle l'additif salin sacrificiel comprend au moins l'un sélectionné à partir du groupe consistant en l'azoture de lithium tel que représenté par LiN3, l'oxocarbone de lithium tel que représenté par $Li_2C_3O_3$, $Li_2C_4O_4$, $Li_2C_5O_5$ ou $Li_2C_6O_6$, le lithium dicarboxylique tel que représenté par $Li_2C_2O_4$, $Li_2C_3O_3$ ou $Li_2C_4O_6$ et l'hydrazide de lithium tel que représenté par $Li_2C_2O_2N_4$.

**12.** Électrode positive pour une batterie secondaire selon la revendication 9, dans laquelle l'additif salin sacrificiel est inclus en une quantité de 0,2 partie en poids à 10 parties en poids sur la base de 100 parties en poids du matériau actif d'électrode positive.

**13.** Électrode positive pour une batterie secondaire selon la revendication 9, dans laquelle le matériau actif d'électrode positive comprend au moins l'un sélectionné à partir du groupe consistant en le nickel (Ni), le cobalt (Co) et le manganèse (Mn).

**14.** Batterie secondaire au lithium comprenant une électrode positive, une électrode négative et un séparateur disposé entre l'électrode positive et l'électrode négative,
dans laquelle l'électrode positive est l'électrode positive pour une batterie secondaire selon l'une quelconque des revendications 9 à 13.

**15.** Batterie secondaire au lithium selon la revendication 14, dans laquelle l'électrode négative comprend un matériau actif d'électrode négative à base de silicium (Si).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- FR 3040547 A1
- WO 2017067996 A1
- KR 20170045173 A
- US 2016372784 A1

### Non-patent literature cited in the description

- *Electrochemistry Communications,* 2010, vol. 12 (10), 1344-1347
- *ECS Transactions,* 2006, vol. 1 (26), 9-16